# EUROPÄISCHE PATENTSCHRIFT

(11) **EP 0 929 884 B1**
(45) Veröffentlichungstag und Bekanntmachung des Hinweises auf die Patenterteilung: **27.10.1999**
(21) Anmeldenummer: 97913101.8
(22) Anmeldetag: 07.10.1997
(51) Int. Cl.: H04M 7/00, H04L 12/64

(54) **VERFAHREN ZUR ÜBERTRAGUNG VON DATEN IN EINEM TELEKOMMUNIKATIONSNETZ UND SWITCH ZUR DURCHFÜHRUNG DES VERFAHRENS**
METHOD FOR TRANSMITTING DATA IN A TELECOMMUNICATIONS NETWORK AND SWITCH FOR IMPLEMENTING SAID METHOD
PROCEDE DE TRANSMISSION DE DONNEES DANS UN RESEAU DE TELECOMMUNICATION ET COMMUTATEUR POUR LA MISE EN OEUVRE DE CE PROCEDE

(30) Priorität: 07.10.1996 DE 19642063; 23.10.1996 DE 19645368
(43) Veröffentlichungstag der Anmeldung: 21.07.1999
(73) Patentinhaber: Teles AG Informationstechnologien, 10587 Berlin (DE)
(72) Erfinder: SCHINDLER, Sigram, D-14109 Berlin (DE); ILLG, Andreas, D-10555 Berlin (DE); LÜDTKE, Karsten, D-12167 Berlin (DE); PAETSCH, Frank, D-10961 Berlin (DE)
(74) Vertreter: Müller, Wolfram Hubertus, Dipl.-Phys.
(86) Internationale Anmeldenummer: DE9702363
(87) Internationale Veröffentlichungsnummer: WO9815933

(56) Entgegenhaltungen:
- EP-A- 0 732 835
- WO-A-95/25407
- WO-A-95/31060
- US-A- 4 903 260
- LOW C ET AL: "WEBIN - AN ARCHITECTURE FOR FAST DEPLOYMENT OF IN-BASED PERSONAL SERVICES" WORKSHOP RECORD. INTELLIGENT NETWORK. FREEDOM AND FLEXIBILITY: REALISING THE PROMISE OF INTELLIGENT NETWORK SERVICES, 21.April 1996, Seiten 1-12, XP002043670
- RABBAGE R ET AL: "INTERNET PHONE- CHANGING THE TELEPHONY PARADIGM?" BT TECHNOLOGY JOURNAL, Bd. 15, Nr. 2, April 1997, Seiten 145-157, XP000676853

## Beschreibung

### Gegenstand der Erfindung

Die Erfindung betrifft ein Verfahren zur Übertragung von Daten von einem ersten Switch zu einem zweiten Switch wahlweise per Leitungsvermittlung oder per Paketvermittlung sowie einen Switch zur Durchführung des Verfahrens.

### Hintergrund der Erfindung

Die heutige Situation in der Telekommunikation zeichnet sich durch eine Zweiteilung zwischen unterschiedlichen Verbindungs- alias Schalttechniken aus. Es handelt sich hierbei um synchrone, leitungsvermittelte Techniken (line-switching oder circuit switching) und um asynchrone, paketvermittelte Techniken (packet-switching).

Leitungsvermittelte Techniken verwenden zwischen den einzelnen Leitungsabschnitten eines Netzes Line-Switches alias Leitungsvermittlungsanlagen, die jeweils 1 Byte-Pakete umkopieren und eine entsprechende Puffergröße aufweisen. Paketvermittelte Techniken verwenden zwischen den einzelnen Leitungsabschnitten eines Netzes Packet-Switches alias Paketvermittlungsanlagen, die Viele-Byte-Pakete umkopieren. Entsprechend beträgt die Puffergröße der Packet-Switches n Bytes, wobei n für die Anzahl der Bytes der umkopierten Datenpakete steht. Der Begriff "Switch" wird nachfolgend derart gebraucht, daß er sowohl einen Line-Switch eines leitungsvermittelten Netzes als auch einen Packet-Switch eines paketvermittelten Netzes umfaßt.

Ein Line-Switch alias Leitungsvermittlungsanlage wird im privaten Bereich Telekommunikationsanlage (TK-Anlage), im öffentlichen Bereich Vermittlungsstelle des Netzanbieters genannt. Ein Packet-Switch alias Paketvermittlungsanlage wird auch als Router, IP-Switch oder Host-Rechner bezeichnet.

Leitungsvermittelte Verbindungen sind synchron, d.h. eine Informationsübertragung von einem Leitungsabschnitt zu einem anschließenden Leitungsabschnitt durch einen Switch (hier: Leitungsvermittlungsanlage) erfolgt im wesentlichen ohne zeitliche Verzögerung.

Bei leitungsvermittelter Durchschaltung wird eine Verbindung kontinuierlich in Echtzeit mit der vollständigen Bandbreite eines Kanals zwischen zwei Punkten zur Verfügung gestellt. Auch wenn keine Nutznachrichten übersandt werden, z.B. während eines Telefongesprächs, ist der Übertragungskanal belegt. Leitungsvermittelte Verbindungen sind teuer, man denke insbesondere an Telefon-Ferngespräche, da die Kosten unabhängig von der tatsächlich übertragenen Information entstehen. Der Vorteil liegt in einer zeitverzögerungsfreien und eine feste Bandbreite zur Verfügung stellenden Verbindung.

Die andere, heute wesentliche Art der Informationsübertragung ist die Paketvermittlung. Bei der Paketvermittlung werden Informationen, z.B. Audiodaten, Videodaten oder Files eines Computers, paketiert und als Datenpakete übertragen. Die Paketvermittlung arbeitet nach einem asynchronen Übertragungsmodus, d.h. Informationen werden zwischen zwei benachbarten Leitungsabschnitten von einem Switch (hier: Paketvermittlungsanlage) zeitverzögert übertragen. Bei der Paketvermittlung muß anders als bei der Leitungsvermittlung keine feste Verbindung aufrechterhalten werden. Sie ist verbindungslos, d.h. jedes Paket wird einzeln und nicht im Zusammenhang mit anderen behandelt.

Die Paketvermittlung wird insbesondere auf dem Internet eingesetzt. Die Datenpakete werden dort als IP-Pakete bezeichnet (IP = Internet Protokoll). Jedes IP-Paket enthält einen Vorspann, in welchem u.a. eine Absender- und eine Empfängeradresse angegeben ist. Die IP-Pakete bilden einen Datenstrom, der über Paketvermittlungsanlagen (alias IP-Switches alias Router alias Host-Rechner) im Internet vom Sender zu dem jeweiligen Empfänger übertragen wird.

Aufgrund der Länge der IP-Pakete (ab 16 Byte aufwärts) tritt in den Paketvermittlungsanlagen eine Zeitverzögerung beim Umkopieren auf. Diese Zeitverzögerung kann bei einer starken Belastung der Paketvermittlungsanlage oder bei einer großen Anzahl von Paketvermittlungsanlagen, die ein Datenpaket auf dem Weg zur Zieladresse durchläuft, derart groß sein, daß gewisse Anwendungen nicht mehr möglich sind.

Die Zeitverzögerungen sind insbesondere bei der Internet-Telefonie bedeutsam. Bei der Internet-Telefonie benutzt ein kostenbewußter Anrufer das normale Internet mit etwa 8 kbit/s Bandbreite und einer Zeitverzögerung von 0.5 Sekunden. Bei Überlastung des Internets wird die Verzögerungszeit der einzelnen Pakete derart lang, daß eine angenehme Gesprächsverbindung zwischen den Telefonpartnern nicht mehr möglich ist.

Internet-Telefonie zeichnet sich durch den großen Vorteil aus, das nur die jeweiligen lokalen Telefongebühren zum nächstem POP (Point of Presence), dem von einem Internet Service Provider ISP angebotenen Einwählpunkt zum Internet anfallen, sowie von den ISPs berechnete Zeitgebühren für die Dauer des Internet-Zugangs sowie ggf. Volumengebühren, nicht jedoch teuere Fernsprechgebühren.

Aus der US-PS 4,996,685 sind ein Verfahren und eine Vorrichtung bekannt, die in einem ISDN Kommunikationsnetz während einer bestehenden Verbindung zwischen einem User und einem Host Computer einen dynamischen Wechsel zwischen einer leitungsvermittelten Verbindung über einen ISDN B-Kanal und einer paketvermittelten Verbindung über einen ISDN D-Kanal ermöglichen. Ein Befehl zum Wechseln zwischen einer leitungsvermittelten und einer paketvermittelten Verbindung geht dabei immer vom Host Computer aus.

Das aus der US-PS 4,996,685 offenbarte Verfahren ist darauf beschränkt, auf einer ISDN-Verbindung einen Wechsel zwischen einer leitungsvermittelten und einer paketvermittelten Datenübertragung vorzunehmen, wobei eine leitungsvermittelte Übertragung auf einem B-Kanal eine paketvermittelte Übertragung auf dem D-Kanal erfolgt. Ein derartiges Verfahren ist zwar sinnvoll, um einen effektiven Zugang von einem Endteilnehmer zu einem Host-Computer, etwa einer Vermittlungsstelle des Telefonnetzes oder einem Zugangspunkt zum Internet herzustellen, betrifft jedoch nicht die Übertragung von Daten zwischen Switches bzw. Routern eines Netzes.

Die WO 95/31060 A1 beschreibt ein Verfahren zur Datenübertragung zwischen einer Informationsquelle und einer Zieleinrichtung, bei der die zu übertragenen Daten als Datenpakete übertragen werden. In Abhängigkeit vom Nachrichtentyp der Datenpakete werden die Daten automatisch entweder ausschließlich leitungsvermittelt oder ausschließlich paketvermittelt übertragen. Insbesondere wird bei kleinen, zu übertragenen Datenmengen eine paketvermittelte Übertragung und bei großen, zu übertragenen Datenmengen eine leitungsvermittelte Datenübertragung gewählt.

Die WO 95/23407 A1 beschreibt ein Verfahren zur Übertragung von Daten zwischen einer Datenquelle und Transceiver entweder über ein paketvermitteltes Netz oder ein leitungsvermitteltes Netz. Dabei ist eine Kontrollvorrichtung vorgesehen, die anhand bestimmter Kriterien festlegt, welches Netz und welche Übertragungsmethode für die Übertragung am geeignetsten ist und diese dann auswählt.

Die US-A-4,903,260 beschreibt ein digitales Koppelnetz und einen Koppelfeldbaustein, die derart ausgestaltet sind, daß von einem beliebigen Eingang zu einem beliebigen Ausgang führende Wege je nach Bedarf entweder für leitungsvermittelte Verbindungen durchgeschaltet oder für paketvermittelte Nachrichten voreingestellt werden können. Voreingestellte Wege für die paketvermittelten Nachrichten bilden dabei ein Netz, dessen Knoten in den Koppelfeldbaustein des Koppelnetzes liegen. In die Koppelfeldbausteine sind diejenigen Funktionseinrichtungen integriert, die erforderlich sind, um jedes Datenpaket auf den dafür voreingestellten Weg zu vermitteln. Es ist damit möglich, ein einziges Koppelnetz je nach Bedarf dynamisch in ein leitungsvermitteltes Netz und ein paketvermitteltes Netz aufzuteilen.

### Aufgabe der Erfindung

Ausgehend von dem dargelegten Stand der Technik liegt der vorliegenden Erfindung die Aufgabe zugrunde, ein Verfahren zur Übertragung von Daten von einem ersten Switch zu einem zweiten Switch sowie einen Switch zur Durchführung des Verfahrens zur Verfügung zu stellen, die in Abhängigkeit vom Datenaufkommen und den Vorgaben eines Nutzers oder eines Netzmanagements eine flexible Datenübertragung zwischen den Switches und insbesondere eine kostengünstige Datenübertragung in Realzeit ermöglichen.

### Zusammenfassung der Erfindung

Diese Aufgabe wird erfindungsgemäß durch ein Verfahren mit den Merkmalen des Anspruchs 1, ein Verfahren mit den Merkmalen des Anspruchs 2 und einen Switch mit der Merkmalen des Anspruchs 17 gelöst. Vorteilhafte und bevorzugte Ausführungsformen der Erfindung sind in der Unteransprüchen angegeben.

Die erfindungsgemäße Lösung ermöglicht, während einer paketvermittelten Verbindung zwischen zwei Switches dynamisch auf eine leitungsvermittelte Verbindung ohne Unterbrechung der Verbindung umzuwechseln. Dies wird immer dann sinnvoll sein, wenn vor den Switches des paketvermittelten Netzes ein "Datenstau" von Datenpaketen vorliegt. Durch den Aufbau einer leitungsvermittelten Verbindung zwischen den Switches wird erfindungsgemäß ein "Bypass" zur Verfügung gestellt, auf dem Daten mit fester Bandbreite und geringen Verzögerungszeiten im wesentlichen mit Realzeit übertragbar sind, so daß der "Datenstau" umgangen wird. Da eine leitungsvermittelte Verbindung jedoch nur bei Bedarf aufgebaut wird, d.h. wenn eine paketvermittelte Datenübertragung nicht mehr die gewünschte Bandbreite aufweist, ermöglicht die Erfindung eine flexible und möglichst kostengünstige Datenübertragung.

Der Begriff "Switch" wird im Sinne der Erfindung dabei wie bereits erläutert derart gebraucht, daß er sowohl einen Line-Switch eines leitungsvermittelten Netzes, der 1-Byte Pakete umkopiert, als auch einen Packet-Switch (Router) eines paketvermittelten Netzes, der Viele-Byte Pakete umkopiert, umfaßt. Bei den zu übertragenen Daten kann es sich um beliebige Daten handeln, etwa Audiodaten, Videodaten oder Files eines Computers.

Die Erfindung stellt zur Durchführung des erfindungsgemäßen Verfahrens Switches zur Verfügung, die sowohl eine Leitungsvermittlung als auch eine Paketvermittlung ermöglichen und dabei die Funktionalität eines Line-Switch und eines Pakket-Switch kombinieren. Ein erfindungsgemäßer Switch weist eine Paketier-Einrichtung zum Paketieren bzw. Depaketieren von Daten, eine IP-Switching-Einrichtung zum Routen von Datenpaketen, eine Line-Switching-Einrichtung zum Verbindungsaufbau zum Durchschalten von Datenkanälen sowie eine Steuereinrichtung auf, die in Abhängigkeit von Steuersignalen ankommende Daten entweder an die IP-Switching-Einrichtung oder an die Line-Switching-Einrichtung leitet.

Die entsprechenden Steuersignale werden durch einen Nutzer oder auf Befehl eines Netzwerkmanagements ausgelöst und zusammen mit anderen Signalisierungsdaten an den Switch übertragen. Alternativ erzeugt der Switch selbst bei Unterschreiten einer bestimmter Bandbreite der paketvermittelten Übertragung automatisch einen entsprechenden Steuerbefehl.

Das aus miteinander verbundenen, erfindungsgemäßen Switches bestehende Netz bildet ein Intranet, auf dem eine Datenübertragung dynamisch zwischen Leitungsvermittlung und Paketvermittlung wechselbar ist und das durch die Möglichkeit, bei Bedarf eine leitungsvermittelte Verbindung fester Bandbreite aufzubauen, unter Normalbedingungen eine Datenübertragung im wesentlichen in Realzeit sicherstellt. Dies ist insbesondere für die Internet-Telefonie von Bedeutung.

Es gibt zahlreiche Einsatzgebiete für die erfindungsgemäßen Switches. Die erfindungsgemäßen Switches können etwa herkömmliche Line-Switches wie TK-Anlagen und Vermittlungsstellen sowie Packet-Switches ersetzen. Insbesondere sind sie zum Bau von neuen Netzen mit Realzeitfähigkeit (Intranets) verwendbar, die sowohl paketvermittelt als auch leitungsvermittelt arbeiten können.

Das erfindungsgemäße Verfahren wird in einer ersten Variante der Erfindung zwischen zwei Switches eingesetzt, die zwar Teil eines leitungsvermittelten Netzes sind, jedoch nicht unmittelbar Teil eines paketvermittelten Netzes. Es wird daher für eine paketvermittelte Übertragung zunächst eine Verbindung über das leitungsvermittelte Netz vom ersten Switch zu einem Zugangspunkt zum paketvermittelten Netz (etwa Internet-Zugangspunkt) aufgebaut. Die Daten werden leitungsvermittelt zum Zugangspunkt zum paketvermittelten Netz übertragen, dort paketiert, sofern sie nicht bereits als Datenpakete vorliegen, und vom Zugangspunkt paketvermittelt über das paketvermittelte Netz zum zweiten Switch übertragen. Bevorzugt werden die Daten dabei bereits im ersten Switch paketiert und als Datenpakete leitungsvermittelt zum Zugangspunkt übertragen.

Sofern beide Switches sowohl Teil eines leitungsvermittelten Netzes als auch eines paketvermittelten Netzes sind, kann in einer zweiten Variante des erfindungsgemäßen Verfahrens eine paketvermittelte Datenübertragung unmittelbar zwischen den Switches erfolgen. Bei beiden Varianten wird bei Vorliegen eines entsprechenden Steuersignals eine leitungsvermittelte Verbindung über das leitungsvermittelte Netz direkt zum zweiten Switch aufgebaut. Sofern kein Bedarf an einer leitungsvermittelten Übertragung mehr besteht, erfolgt ein Wechsel zurück zu einer paketvermittelten Übertragung.

In einer Ausführungsform des erfindungsgemäßen Verfahrens bleiben die Datenpakete nach dem Wechsel auf eine leitungsvermittelte Datenübertragung als Datenpakete bestehen und werden als solche leitungsvermittelt übertragen. In einer alternativen Ausführungsform werden die Datenpakete dagegen depaketiert, insbesondere die Header der Datenpakete entfernt, und die Daten erst dann leitungsvermittelt übertragen. Der Vorteil der ersten Variante liegt darin, daß die Daten bei einem erneuten Übergang zu einem paketvermittelten Netz bereits als Datenpakete vorliegen und daher beim Switchen Zeit gespart wird. Der Vorteil der zweiten Variante liegt darin, daß durch Entfernen der Header der einzelnen Datenpakete die effektive Bandbreite der Datenübertragung erhöht wird.

In einer bevorzugten Ausgestaltung des erfindungsgemäßen Verfahrens wird zum Übertragen der Datenpakete vom ersten Switch zum Zugangspunkt zum paketvermittelten Netz und zum Übertragen der Daten vom ersten Switch zum zweiten Switch über das leitungsvermittelte Netz derselbe Datenkanal verwendet. Dies hat den Vorteil, daß stets nur ein Datenkanal belegt wird, der je nach Übertragungsart Daten entweder zum Zugangspunkt zum paketvermittelten Netz oder zum anderen Switch überträgt. Insbesondere wird bei einem ISDN-Netz derselbe B-Datenkanal sowohl zum Versenden der Daten zum Zugangspunkt zum paketvermittelten Netz und zum Versenden von Daten über einen Bypass zu einem anderen Switch benutzt.

Eine Datenübertragung vom ersten Switch zum Zugangspunkt zum paketvermittelten Netz erfolgt stets leitungsvermittelt. Hierduch wird im Vergleich zu einer an sich auch möglichen paketvermittelten Übertragung zum Zugangspunkt (etwa über einen ISDN D-Kanal) eine größere und feste Bandbreite bis zum Zugangspunkt sichergestellt. Sofern ein ISDN-Netz vorliegt, wird als Datenkanal ein ISDN B-Kanal verwendet. Datenpakete werden dabei über den B-Kanal versendet, indem sie auf den ISDN-Rahmen aufgebracht werden. Dies ist an sich bekannt und etwa im Protokoll PPP festgelegt.

In einer weiteren Ausführungsform zwei Datenkanäle zur Datenübertragung vom ersten Switch vorgesehen, wobei über den ersten Datenkanal die Datenpakete zum Zugangspunkt zum paketvermittelten Netz und über den zweiten Datenkanal die Daten leitungsvermittelt zum zweiten Switch übertragen werden. Je nach Übertragungsart wird entweder der eine Datenkanal oder der andere Datenkanal verwendet. Dies hat den Vorteil, daß Daten gleichzeitig paket- und leitungsvermittelt übertragen werden können. Beispielsweise werden weniger wichtige Daten wie Schriftzeichen paketvermittelt und Audiodaten leitungsvermittelt übertragen.

In einer weiteren bevorzugten Ausgestaltung der Erfindung werden bei einer leitungsvermittelten Datenübertragung zwischen dem ersten Switch und dem zweiten Switch bzw. zwischen dem ersten Switch und dem Zugangspunkt zum paketvermittelten Netz die Daten mehrerer Nutzer unter Bildung von Subkanälen fester Bandbreite auf einem Datenkanal gemultiplext. Dabei ist vorgesehen, daß die Daten eines Nutzers nach dessen Wahl mit einer Übertragungsrate leitungsvermittelt übertragen werden, die einem Bruchteil der Übertragungsrate der dem Nutzer standardgemäß zur Verfügung stehenden Bandbreite entspricht.

Insbesondere werden bei einem ISDN-Netz auf den B-Kanälen Subkanäle einer Bandbreite von 32, 16, 8, 4, 2 oder 1 kbit/s zur Verfügung gestellt. Zur Implementierung der Subkanäle werden nur jedes n-te Byte oder jedes n-te bit eines ISDN-Rahmens sogleich umkopiert und auf dem durchgeschalteten Datenkanal zum nächsten Switch bzw. zum Computernetz-Zugangspunkt weitergeleitet.

Die Bildung von Subkanälen auf einem Datenkanal, etwa einem ISDN B-Kanal oder einem Datenkanal des GSM Mobilfunksystems, ermöglicht eine zusätzliche Flexibilität bei der Datenübertragung. Bei vielen Anwendungen wird es völlig ausreichen, daß die Bandbreite nur einem Teil der auf einem Datenkanal zur Verfügung stehenden Bandbreite ausmacht. Die Nutzung des Subkanals weist für einen Nutzer dabei den Vorteil auf, daß entsprechend der Bandbreite des Subkanals geringere Kosten anfallen, dabei jedoch eine feste Bandbreite zur Verfügung gestellt wird. Subkanäle unterschiedlicher Bandbreite definieren dabei unterschiedliche Dienstgüten.

Es stehen somit eine paketvermittelte Übertragung, eine leitungsvermittelte Übertragung mit einem Teil der zur Verfügung stehenden Bandbreite eines Datenkanals und eine leitungsvermittelte Übertragung mit der vollständigen Bandbreite des Datenkanals alternativ zur Verfügung.

In einer weiteren Ausgestaltung des erfindungsgemäßen Verfahrens werden bei einem Wechsel von einer paketvermittelten zu einer leitungsvermittelten Übertragung die Adreßinformationen der Datenpakete ausgewertet und nach netztopologischen Gesichtspunkten geordnet. Dabei wird zu Datenpaketen, deren Zieladressen den gleichen topologischen Teilbereich des Netzes betreffen, ein in diesem Teilbereich befindlicher Switch ausgewählt, eine leitungsvermittelte Verbindung (Bypass) zu dem ausgewählten Switch aufgebaut und die entsprechenden Daten bzw. Datenpakete leitungsvermittelt zu dem Switch übertragen.

Eine Ordnung der Datenpakete erfolgt dabei bevorzugt nach geographischen Gesichtspunkten, wobei zu Datenpaketen, deren Zieladressen den gleichen geographischen Raum betreffen, ein in diesem geographischen Raum befindlicher Switch ausgewählt und eine leitungsvermittelte Verbindung zu diesem Switch aufgebaut wird. Dies ermöglicht, in effektiver Weise einen Bypass aufzubauen, da für Datenpakete mit in etwa gleichem Ziel eine leitungsvermittelte Verbindung direkt zum einem Netzknoten aufgebaut wird, der netztopologisch im Zielbereich der Datenpakete liegt. Der Aufbau eines effektiven Bypasses zwischen den einzelnen Switches hat bei paketvermittelten Netzen große Bedeutung, da ein Datenpaket etwa auf dem Weg von Berlin nach München über Paris und New York laufen kann. Durch Zusammenfassen sämtlicher etwa nach München bestimmter Datenpakete und übertragen dieser Datenpakete leitungsvermittelt direkt von Berlin nach München wird eine effektive Datenübertragung ermöglicht.

Zu einer Ordnung der Datenpakete nach geographischen Gesichtspunkten ist bevorzugt vorgesehen, die Zieladressen mit in einer Datenbank gespeicherten Zieladressen zu vergleichen, wobei die Datenbank eine Zuordnung zwischen Zieladressen und der zugehörigen geographischen Lage enthält. Die Datenbank ist dabei bevorzugt in dem Switch integriert. Sofern es sich bei den Datenpaketen um IP-Datenpakete handelt, werden die jeweiligen IP-Adressen in der Datenbank "nachgeschlagen" und je nach geographischem Ziel einem bestimmten Bypass zugeordnet.

### Beschreibung eines Ausführungsbeispiels

Die Erfindung wird nachfolgend unter Bezugnahme auf die Figuren der Zeichnung an mehreren Ausführungsbeispielen näher erläutert. Es zeigen:
- Fig. 1: schematisch ein erfindungsgemäßes Telekommunikationsnetz,
- Fig. 2: schematisch ein im Stand der Technik bekanntes Telekommunikationsnetz,
- Fig. 3: schematisch ein Telekommunikationsnetz, in dem erfindungsgemäße Switches ein Intranet ausbilden,
- Fig. 4: eine schematische Darstellung eines erfindungsgemäßen Switches,
- Fig. 5a: ein Ablaufdiagramm des erfindungsgemäßen Verfahrens zur Übertragung von Daten zwischen zwei Switches und
- Fig. 5b: ein Ablaufdiagramm des erfindungsgemäßen Verfahrens zur Auswahl eines Ziel-Switches unter topologischen Gesichtspunkten.

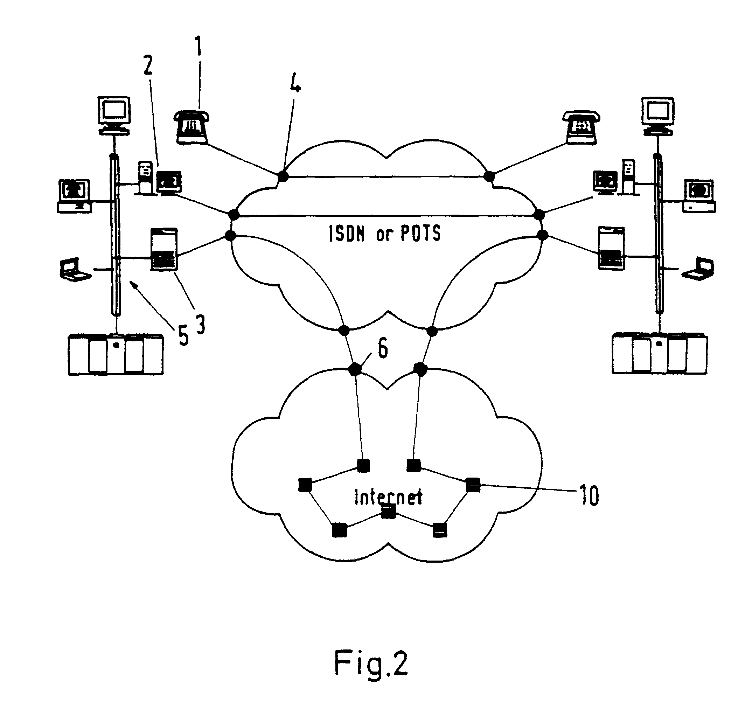

Fig. 2 zeigt ein herkömmliches Telekommunikationsnetz. Datenendeinrichtungen wie Telefon 1 oder Personal Computer 2 sind direkt oder mittels einer Telekommunikationsanlage (TK-Anlage) 3 über eine ISDN/POTS Leitung mit einer Vermittlungsstelle 4 des Fernmeldenetzes verbunden. An die TK-Anlage 3 ist gegebenenfalls ein lokales Netzwerk LAN 5 angeschlossen. Die Vermittlungsstellen 4 leiten eingehenden Verbindungswünsche weiter und stellen leitungsvermittelte Verbindungen zur Verfügung. Über einen Einwählpunkt POP (Point of Presence) 6 wird ein Zugang zu einem paketvermittelten Netz ermöglicht. Über das paketvermittelte Netz werden Daten zwischen miteinander vernetzten Packet-Switches 10 paketvermittelt übertragen.

Nachfolgend wird als paketvermitteltes Netz das Internet betrachtet, ohne daß die Erfindung jedoch darauf beschränkt ist. Vielmehr können beliebige paketvermittelte Netze wie etwa auch Mobilfunknetze im Rahmen der Erfindung eingesetzt werden.

Die eingesetzten Techniken sind an sich bekannt. Die Datenübertragung zwischen Endgerät 1, 2 und einem Line-Switch (TK-Anlage 3 oder Vermittlungsstelle 4) erfolgt leitungsvermittelt, ebenso die Datenübertragung zwischen den einzelnen Line-Switches (etwa zwischen den einzelnen Vermittlungsstellen 4 oder zwischen der Vermittlungsstelle 4 und dem Einwählpunkt POP 6 des Internet Service Providers ISP). Ein Durchschalten der Leitungen erfolgt über Koppelfelder, die in der Vermittlungsstelle und in der TK-Anlage realisiert sind.

Besonders verbreitet bei ISDN-Netzen ist das PCM 30 System, bei dem 8 Bit Codewörter für je 30 Nutzkanäle innerhalb einer Abtastperiode von 125 µs gemultiplext und in einem Pulsrahmen gesendet werden. Auf einem einzelnen Nutzkanal findet dabei kein Multiplexing statt. Der Pulsrahmen wird in ständiger Wiederholung zwischen Sender und Empfänger übertragen, auch wenn keine Nutzsignale enthalten sind. Im digitalen Koppelfeld werden einzelne Bytes umkopiert und dann versendet (switch von 1-byte-Paketen). Da während des Vermittlungsvorgangs jeweils nur ein Byte in einen Informationsspeicher eingelesen und dann wieder ausgelesen wird, entsteht bei der Vermittlung des Verbindungswegs eine nur minimale zeitliche Verzögerung.

Ab dem Zugangspunkt POP 6 zum Internet erfolgt eine Datenübertragung paketvermittelt auf der Grundlage des bekannten Netzprotokolls UDP/IP oder TCP/IP. Der Zugang zum Internet wird durch einen Packet-switch (nachfolgend auch als IP-Switch bezeichnet) bewirkt, der Datenpakete, die nicht für ihn selbst bestimmt sind, entgegennimmt und an das Teilnetz, dessen Adresse sie tragen, weiterleitet. Beim Routen erfolgt ein Umkopieren der IP-Pakete (switch von viele-byte-Paketen). Entsprechend der Größe der IP-Pakete und der Anzahl der ein IP-Paket weiterleitenden IP-Switche treten im paketvermittelten Netz Zeitverzögerungen auf. Diese können bei Überlastung der IP-Switche 10 derartige Ausmaße annehmen, daß etwa bei der Internet-Telefonie Verzögerungen von mehr als 0.5 s auftreten.

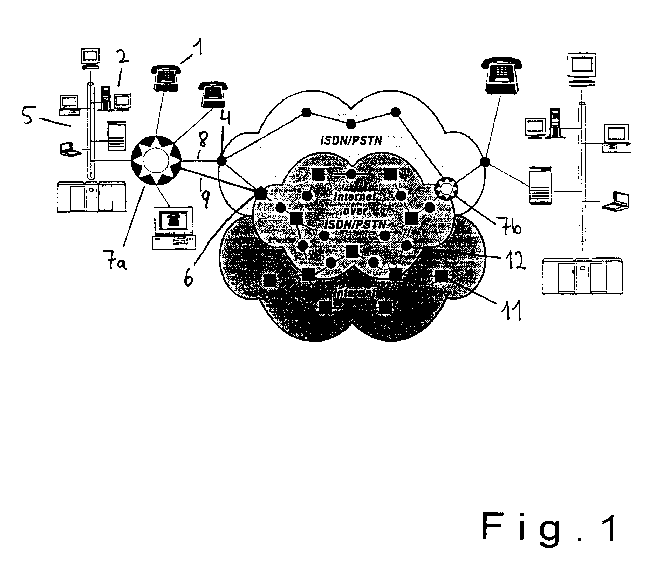

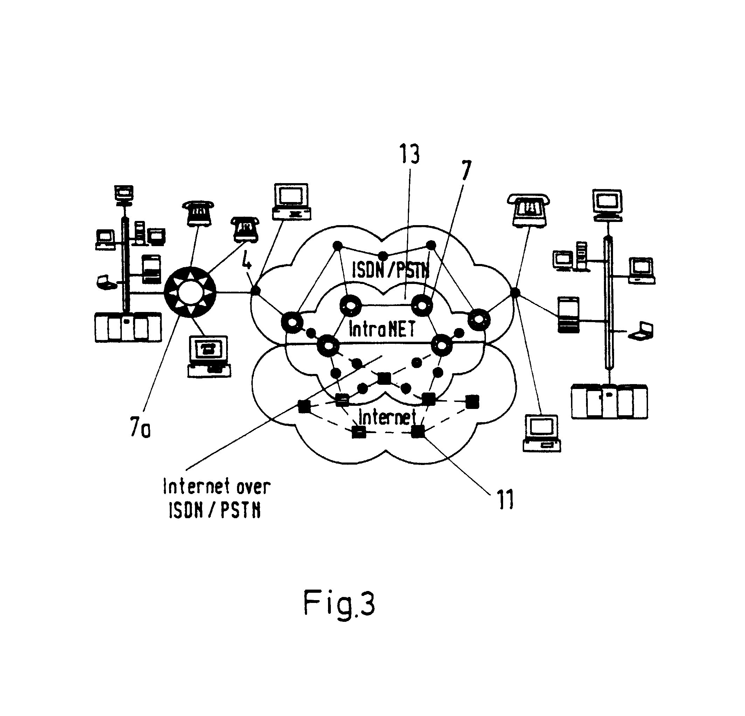

Figur 1 zeigt ein erfindungsgemäßes Telekommunikationsnetz mit erfindungsgemäßen Switches 7a, 7b, die als Stern dargestellt und im einzelnen in Fig. 3 beschrieben sind. Die Switches 7a, 7b integrieren die Funktionalität eines Pakket-Switchs und eines line-switch.

Wesentlich ist dabei die Möglichkeit, zwischen Paketvermittlung und Leitungsvermittlung während einer Übertragung dynamisch umzuschalten, wie noch näher beschrieben werden wird. Dadurch wird es möglich, aus einer asynchronen paketvermittelten Übertragung variabler Bandbreite bei Wunsch auf eine synchrone leitungsvermittelte Übertragung größerer und fester Bandbreite umzustellen. Internet-Telefonie und das Downloaden von Files von einem WWW-Server sind zwei wichtige Anwendungen.

Die Implementierung der Switches 7a, 7b erfolgt wahlweise durch Hardware oder Software. Bevorzugt wird dabei die Leitungsvermittlung durch Hardware und die Paketvermittlung durch Software implementiert. So werden bei der Leitungsvermittlung nach Durchschalten einer Verbindung die Daten ohne weitere Überprüfung weitergeleitet, während bei einer Paketvermittlung die Zieladresse jedes Datenpakets ausgewertet und anhand von Routing-Tabellen der nächste IP-Switch ausgewählt werden muß. Eine Umschaltvorrichtung des Switches 7, die einen Wechsel zwischen Paket- und Leitungsvermittlung vornimmt, ist bevorzugt ebenfalls als Software implementiert.

Die Switches 7a, 7b können gemäß Fig. 1 an verschiedenen Stellen des Telekommunikationsnetzes angeordnet sein. Der Switch 7a stellt ein Dienstzugangs-Modul zur Verbindung des LANs 5 bzw. der Endeinrichtungen 1, 2 mit dem ISDN/PSTN Netz und dem Internet dar. Benutzerseitig weist der Switch 7a etwa eine Ethernet-Schnittstelle für einen LAN-Anschluß, eine Druckerschnittstelle und Schnittstellen zum Anschluß von Telefonen (Funktelefone, ISDN-Telefone, analoge Telefone) auf (nicht dargestellt). Über eine Leitung 8 ist der Switch 7a mit einer Vermittlungsstelle 4 des Telefonnetzes verbunden.

Da der Switch 7a nicht Teil des Internets ist, ist es zur paketvermittelten Übertragung von Daten über das Internet erforderlich, zunächst eine Verbindung zum Zugangspunkt POP 6 herzustellen. Dies kann über die Vermittlungsstelle 4 oder auch über eine Standleitung 9 zum POP 6 erfolgen. Bis zum POP 6 werden die Daten leitungsvermittelt übertragen, wobei sie bevorzugt bereits paketiert sind. Sofern ein Wechsel auf eine leitungsvermittelte Datenübertragung erfolgen soll, wird über die Vermittlungsstelle 4 eine Leitung zu einem anderen Switch durchgeschaltet und werden die Daten daraufhin leitungsvermittelt übertragen. Der Switch 7a routet somit die IP-switched/line-switched Kanäle auf der von ihm kontrollierten Leitung 8 derart, daß sie kostengünstiger oder echtzeitfähiger werden, je nach Wunsch des Nutzers bzw. Bereitstellers der Kanäle.

Der Switch 7b ist ins Internet integriert und mit weiteren IP-Switches 11 und/oder Line-Switches 12 verbunden. Idealerweise besteht das Netz nur noch aus Switches 7b, die sowohl Line-switching und Packetswitching ermöglichen, so daß bei jedem Switch 7b die Möglichkeit besteht, bei Bedarf statt einer paketvermittelten Übertragung eine höherqualitative leitungsvermittelte Übertragung zur Verfügung zu stellen. Dabei wird eine leitungsvermittelte Übertragung als Bypass insbesondere zwischen Switches aufgebaut, zwischen denen ein "Datenstau" herrscht.

Fig. 3 zeigt ein Telekommunikationsnetz, bei dem Switches 7, die eine Informationsübertragung wahlweise per Paketvermittlung oder per Leitungsvermittlug ermöglichen, innerhalb des Internets ein Intranet ausbilden. Zwischen den Switches 7 besteht dabei eine Realzeit-Kommunikationsmöglichkeit. Damit dies stets möglich ist, stehen zwischen den einzelnen Switches 7 zusätzliche Realzeit-Kommunikationskanäle 13 zur Verfügung. Dabei handelt es sich etwa um zusätzliche ISDN/PSTN-Verbindungen oder zusätzliche Intranet-Kanäle. Es kann damit zwischen den Switches 7 eine leitungsvermittelte Verbindung (Bypass) nicht nur über das Telefonnetz, sondern auch über gesonderte Kanäle erfolgen.

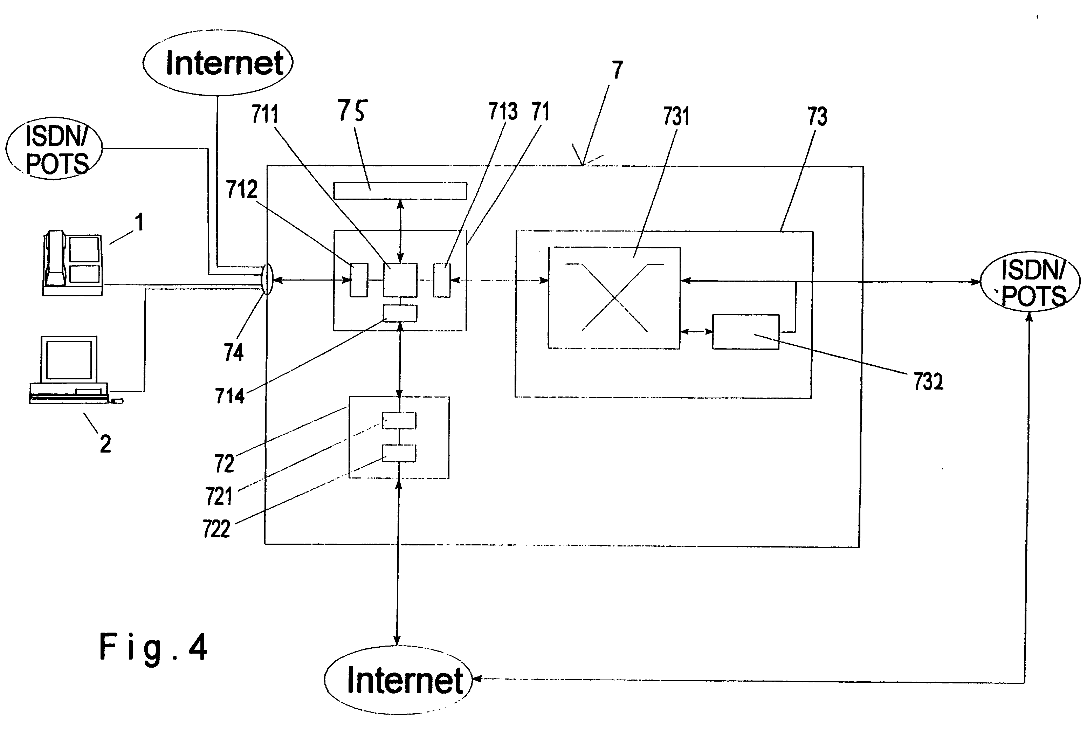

Fig. 4 zeigt schematisch den Aufbau eines erfindungsgemäßen Switches 7. Der Switch 7 ist Teil sowohl eines paketvermittelten Netzes (Internet) als auch eines leitungsvermittelten Netzes (Telefonnetz), d.h. er ist über Leitungen mit weiteren Netzknoten verbunden, zu denen er leitungsvermittelt oder paketvermittelt Daten übertragen bzw. empfangen kann.

Über einen Dateneingang 74 eingehende Daten können eine beliebige Quelle haben, insbesondere von einem IP-Switch/ Router, einem line-switch wie einer Vermittlungsstelle oder einer Telekommunikationsanlage, von einem LAN oder von einer Endeinrichtung 1, 2 kommen. Der Dateneingang 74 weist hierzu in an sich bekannter Weise eine Ethernet-Schnittstelle, eine analoge Schnittstelle mit A/D Wandler und eine ISDN-Schnittstelle auf. Ergänzend sind gegebenenfalls auch eine ATM-Schnittstelle sowie eine Schnittstelle zu einem Mobilfunknetz vorgesehen. Bei ISDN-Netzen handelt es sich bei den ankommenden Daten um 8 Bit lange Wörter, die auf einer gemultiplexten Zubringerleitung des Switchs 7 ankommen.

Der Switch 7 weist einen an sich bekannten IP-Switch 72 auf, der ankommende IP-Pakete umkopiert (switch von viele-byte-Paketen) und entsprechend der Adresse der Pakete im Internet an geeignete Switches weiterversendet. Es wird hierbei auf die bekannten Internet-Protokolle IP/UDP und IP/TCP zurückgegriffen. In den IP-Switch 72 ist optional eine Datenkompressionseinrichtung 721 integriert. Zur Datenkompression wird auf für die Individualkommunikation entwickelte internationale Kompressionstandards zurückgegriffen, insbesondere Kompressionsverfahren gemäß den ITU-Standards G.72X. Des weiteren ist optional eine Verschlüsselungseinrichtung 722 zur Verschlüsselung der Datenpakete vorgesehen.

Weiter weist der Switch 7 eine Line-Switching-Einrichtung 73 auf. Diese weist ein an sich bekanntes digitales Koppelfeld 731 zum Durchschalten von Fernsprechkanälen des leitungsvermittelten Netzes und eine Multiplex/Demultiplexeinrichtung 732, die Subkanäle auf bestehenden Datenkanälen herstellt, auf, wie noch näher erläutert werden wird.

Die internen Steuerbefehle, ob eine Paketvermittlung über den IP-Switch oder eine Leitungsvermittlung über die Line-switching-Einrichtung 73 erfolgen soll, werden in einer Steuereinrichtung 71 erzeugt. Bei der Einrichtung 71 handelt es sich im wesentlichen um einen Schalter, der die ankommenden Daten entweder als Datenpakete zu dem IP-Switch 72 oder als Bitstrom zu der Line-switching-Einrichtung 73 weiterleitet. Hierzu werden die Steuernachrichten der ankommenden Daten ausgewertet. Die Umschalt-Steuereinheit 711 überwacht und steuert des weiteren, welche offenen Verbindungen bestehen (d.h. welche und wie viele Datenkanäle anliegen) und welche Bandbreite die einzelnen Datenkanäle benötigen.

Im einzelnen weist die Steuereinrichtung 71 einen Umschalt-Steuereinheit 711, zwei Paketier-/Depaketiereinrichtungen 713, 714 und ein Zwischenregister 712 auf. Die Umschalt-Steuereinheit ist mit einer Topographie-Datenbank 75 verbunden, die geographische Informationen zu einer Vielzahl von IP-Adressen enthält.

Sofern es sich bei den ankommenden Daten um IP-Pakete handelt, wird von der Umschalt-Steuereinheit 711 der Vorspann der IP-Pakete ausgewertet. Sofern es sich bei den ankommenden Daten um einen kontinuierlichen Datenstrom handelt, werden von der Umschalt-Steuereinheit 711 die Signalisierungsinformationen des Signalisierungskanals (Inband-Signalisierung oder Outband-Signalisierung) ausgewertet. Der Grundzustand sieht dabei vor, daß die ankommenden Daten über den IP-Switch 72 ins Internet gesandt werden. Falls die ankommenden Daten noch nicht als IP-Pakete vorliegen, werden sie in der Paketierungs-/Depaketierungseinrichtung 714 in entsprechende IP-Pakete gepackt und dann zum IP-Switch weitergeleitet.

Sofern die Daten als IP-Pakete vorliegen, jedoch leitungsvermittelt über die Line-Switching-Einrichtung 73 übertragen werden sollen, werden die Daten in der Paketierungs-/Depaketierungseinrichtung 713 gegebenenfalls depaketiert. Dabei wird insbesondere der Vorspann der Datenpakete entfernt. Eine Depaketierung ist allerdings optional und nicht zwingend notwendig, da auch Datenpakate leitungsvermittelt übertragen werden können, etwa gemäß dem Protokoll PPP. Von der Umschalt-Steuereinheit 711 werden die (paketierten oder nicht paketierten) Daten als Bitstrom zur Line-Switching-Einrichtung 73 übertragen.

Über einen Steuerbefehl, der von einer Endeinrichtung oder einem anderen Switch gesendet wird und beispielsweise durch einen Nutzer durch Drücken einer bestimmten Taste an seiner Endeinrichtung oder durch das Netzwerkmanagement ausgelöst wird, erfolgt eine Umstellung der Vermittlungsart auf leitungsorientierte bzw. paketorientierte Vermittlung.

Ein Signalisierungsbefehl zum Wechseln zwischen Paket- und Leitungsvermittlung wird beispielsweise durch eine bestimmte Bit-Folge dargestellt. Dabei speichert die Schalteinrichtung 71 die eingehenden Signalisierungsdaten in dem Zwischenregister 712 und vergleicht sie mit gespeicherten Bit-Folgen. Sofern eine bestimmte Bitfolge vorliegt, erfolgt ein Umschalten auf die andere Vermittlungsart. Alternativ kann auch vorgesehen sein, daß die Umschalt-Steuereinheit 711 die Bandbreite einer Übertragung überwacht und bei Unter- bzw. Überschreiten einer bestimmten Bandbreite und/oder einer vorgegenenen Verzögerungszeit beim Weiterleiten von IP-Datenpaketen automatisch einen Steuerbefehl zum Umschaltung auf die jeweils andere Übertragungsart auslöst.

Zur Umstellung von einer Paketvermittlung auf eine Leitungsvermittlung wird auf Befehl der Umschalt-Steuereinheit 711 in an sich bekannter Weise über die Line-Switching-Einrichtung 73 eine leitungsvermittelte Verbindung (Bypass) zu einem anderen Switch (Ziel-Switch) aufgebaut. Hierzu wird der ISDN-Signalisierungsbefehl SETUP an die nächste Vermittlungsstelle gesandt. Nach Aufbau der Verbindung werden sämtliche ankommenden Daten der betracheten Kommunikationsverbindung nicht mehr über den IP-Switch 72, sondern über die Line-Switching-Einrichtung 73 geleitet. Über den aufgebauten Bypass zum anderen Switch werden die Daten nun leitungsvermittelt mit fester Bandbreite übertragen.

Dabei prüft die Umschalt-Steuereinheit 711 im Rahmen des Umschaltvorgangs vor Weitergabe der Daten an die Einrichtung 73, ob es sich um IP-Pakete handelt und ob in der Paketier-/Depaketiereinrichtung 713 eine Depaketierung erfolgen soll. Die Entscheidung hierüber wird in Abhängigkeit von Steuersignalen des Netzwerkmanagements oder der Endeinrichtung oder alternativ von der Umschalt-Steuereinheit 711 selbst in Abhängigkeit vom Datenaufkommen getroffen. Die Steuersignale enthalten hierzu entsprechende Übertragungsparameter. In jedem Fall werden die Daten nach Weiterleitung an die Einrichtung 73 anschließend im Koppelfeld 731 auf einen ISDN-Datenrahmen aufgesetzt.

Zum Aufbau einer möglichst effektiven leitungsvermittelten Verbindung ist es wichtig, einen geeigneten Ziel-Switch auszuwählen, zu dem der Bypass aufgebaut wird. Hierzu wird als Ziel-Switch ein Switch ausgewählt, der in einem geographischen Gebiet liegt, das mit der Zieladresse zahlreicher IP-Pakete übereinstimmt. Es werden dann insbesondere diese IP-Pakete über den Bypass an den entsprechenden Ziel-Switch übertragen, so daß die Datenpakete vom Ziel-Switch nur noch eine kurze Übertragungsstrecke zum endgültigen Ziel haben.

Die Ordnung der IP-Pakete und Auswahl eines entsprechenden Ziel-Switches erfolgt mittels der Topologie-Datenbank 75, die eine geographische Zuordnung zwischen einer Vielzahl von IP-Adressen und deren geographischer Lage enthält. Es wird in der Line-Switching-Einrichtung 73 die IP-Zieladresse jedes Datenpaketes mit den in der Datenbank 75 gespeicherten Adressen verglichen und bei einer erfolgreichen Zuordnung der IP-Adresse dieser eine Kennung gegeben. Dabei kann es sich etwa um eine Zahl handeln, die eine bestimmte geographische Region kennzeichnet. Diese Kennung wird vom Koppelfeld 731 erkannt und das Datenpaket dann zu dem entsprechenden Ziel-Switch durchgeschaltet.

Da es zu einer zu großen Zeitverzögerung führen würde, zu jedem Datenpaket die Datenbank 75 abzufragen, enthält die Umschalt-Steuereinheit 711 ein Cache, auf das schnell zugegriffen werden kann und in dem das Ergebnis der letzten Datenbankabfragen gespeichert wird. Sofern die IP-Adresse eines über den Dateneingang 74 ankommenden Datenpakets in dem Cache gespeichert ist, kann schnell die entsprechende Kennung vergeben werden.

Sofern die IP-Adresse nicht im Cache enthalten ist, wird eine Datenbankabfrage vorgenommen und werden die IP-Pakete weiter an den IP-Switch 72 geleitet, bis das Ergebnis der Datenbankabfrage vorliegt. Erst dann erfolgt ein Umschalten für diese Daten auf eine leitungsvermittelte Übertragung über einen Bypass. Dabei ist es möglich, daß gleichzeitig mehrere Bypässe zu verschiedenen Ziel-Switches vorliegen, wobei die Umschalt-Steuereinheit 711 das Koppelfeld 731 derart steuert, daß die Datenpakete jeweils an den netztopologisch günstigsten Ziel-Switch gesandt werden. Die Umschalt-Steuereinheit 711 teilt dem Koppelfeld 731 also mit, welche Daten an welche Ziel-Switches gesandt werden sollen.

Sofern die Zieladresse eines Datenpakets in der Datenbank 75 nicht enthalten ist, werden diejenigen Zwischenknoten des paketvermittelten Netzes auf ihre Auslastung überprüft, die normalerweise bei der Versendung von Datenpaketen mit einer bestimmten Zieladresse durchlaufen werden. Hierzu werden zwischen den einzelnen Netzknoten in an sich bekannter Weise durch Trace-Routing die entsprechenden Informationen ausgetauscht. Zu den geeigneten Zwischenknoten, d.h. den Zwischenknoten mit geringer Auslastung, wird ermittelt, ob die ISDN-Nummer bekannt ist und diese ggf. angefordert. Dabei bedient sich die Umschalt-Steuereinheit 711 der Datenbank 75 in bereits beschriebener Weise. Es wird dann von der Umschalt-Steuereinheit 711 ein Bypass zu einem Switch aufgebaut, der in der Kette der Switches möglichst nahe an dem Ziel-Switch liegt.

Die Multiplex/Demultiplexeinrichtung 732 der Line-Switching-Einrichtung 73 ermöglicht in Abhängigkeit von Steuerbefehlen der Umschalt-Steuereinheit 711 eine leitungsvermittelte Übertragung auf Subkanälen mit einer Bandbreite, die einem Bruchteil der üblichen Bandbreite eines betrachteten Datenkanals entspricht. Es werden dabei Datenkanäle gebündelt, die im Koppelfeld 731 entsprechend den Steuerbefehlen der Umschalt-Steuereinheit 711 gebildet bzw. vermittelt werden. Es wird als ISDN-Datenrahmen ein Zeitmultiplexkanal des PCM-30-Systems betrachtet, der Informationen von 30 Datenkanälen und zwei Signalkanälen aufweist. Die Bandbreite der Datenkanäle beträgt jeweils 64 kbit/s.

Die Multiplex/Demultiplexeinrichtung 732 ermöglicht ein Multiplexing innerhalb jedes der 30 Datenkanäle des Zeitmultiplexkanals. Hierzu werden alternativ zwei Verfahren eingesetzt. In einem ersten Verfahren wird jeweils nur eine Teilmenge der 8 bit eines PCM-Wortes durchgeschaltet, also 1, 2 oder 4 bit. Entsprechend reduziert sich die Bandbreite auf 8, 16 oder 32 kbit/s. Die Daten mehrerer Kanäle werden auf diese Weise auf einem Datenkanal gemultiplext.

Alternativ wird ein PCM-Wort (Byte) des Zeitmultiplexkanals des PCM-30-Systems nicht in jedem der aufeinanderfolgenden Pulsrahmen, sondern nur in jedem n-ten Pulsrahmen durchgeschaltet, wobei die Bandbreite sich auf 64kbit/s / n reduziert.

Die beiden beschriebenen Multiplex-Verfahren können auch kombiniert werden. Beispielsweise wird für einen Datenkanal eine Bandbreite von 1 kbit/s dadurch realisiert, daß jedes achte bit in jedem achten Rahmen des abgehenden Datenkanals von dem betrachteten Datenkanal stammt.

Das Durchschalten in der Line-Switching-Einrichtung 731 erfolgt in Abhängigkeit von der gewählten Datenrate und bezieht bei Übertragungsraten pro Datenkanal ungleich 64kbit/s die Multiplex/Demultiplexeinrichtung 732 mit ein. Sofern auf einem Datenkanal kein Multiplexing stattfindet, werden die Daten an der Multiplex/Demultiplexeinrichtung 732 vorbeigeleitet.

Für den betrachteten Kanal oder Subkanal erfolgt eine leitungsvermittelte Übertragung zu dem Switch, der die andere Seite der leitungsvermittelten Verbindung darstellt, bis erneut ein Steuerbefehl an die Einrichtung 71 ergeht, wieder auf packet-switching umzuschalten. Dieser Befehl wird wiederum durch eine bestimmte Bit-Folge kodiert bzw. automatisch erzeugt. Daraufhin wird durch die Steuereinrichtung die durchgeschaltete Leitung abgebrochen und die eingehenden Daten werden wieder an den IP-switch 72 geleitet.

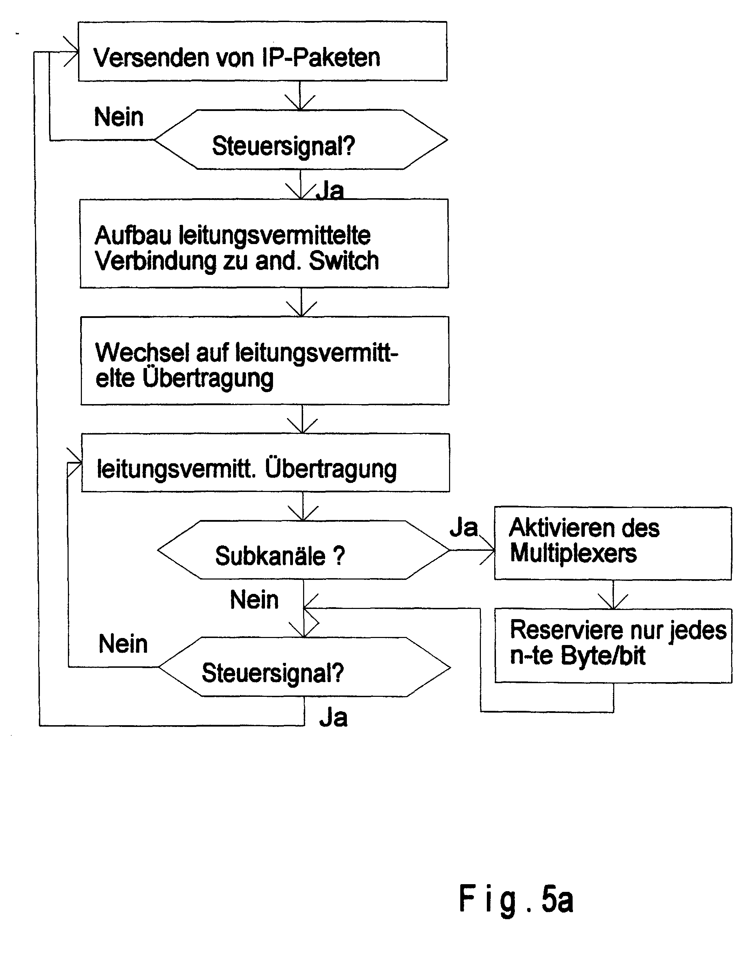

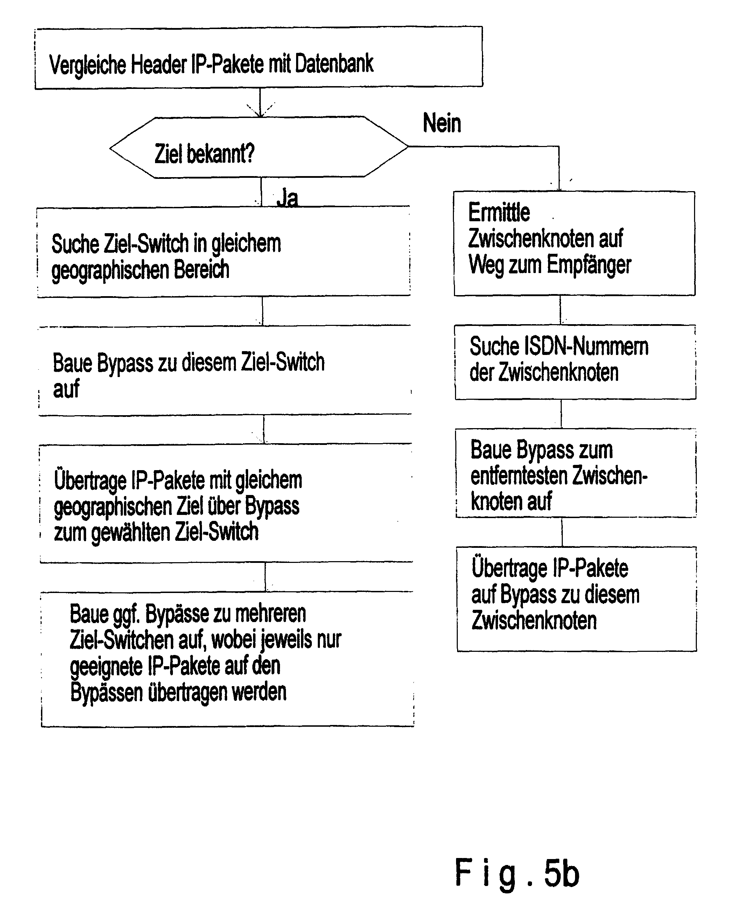

Die Figuren 5a und 5b verdeutlichen den Verfahrensablauf. Figur 5a zeigt den Ablauf des Verfahrens bei einem Wechsel von einer paketvermittelten Datenübertragung auf eine leitungsvermittelte Datenübertragung zwischen zwei Switches. Bei Vorliegen eines entsprechenden Steuersignals wird eine leitungsvermittelte Verbindung zu einem anderen Switch aufgebaut und die Daten leitungsvermittelt gesendet.

Sofern eine leitungsvermittelte Datenübertragung auf Subkanälen fester Bandbreite erfolgen soll, wird ein Multiplexer/Demultiplexer aktiviert, der mehrere Datenströme derart multiplext, daß jeweils nur jedes n-te Bit und/oder jedes n-te Byte im abgehenden Datenstrom für einen eingehenden Datenstrom reserviert wird. Dabei kann vorgesehen sein, daß die einzelnen Subkanäle eine unterschiedliche Bandbreite haben, d.h. die verschiedene Eingangs-Datenströme unterschiedliche Anteile am abgehenden Datenstrom haben. Bei Vorliegen eines weiteren Steuersignals erfolgt ein Wechsel zurück zu einer paketvermittelten Übertragung.

Fig. 5b verdeutlicht die Auswahl eines geeigneten Switches beim Aufbau eines Bypasses. Hierzu werden Header der IP-Datenpakete mit Informationen einer Datenbank verglichen. Sofern die Header-Information einem bestimmten geographischen Ziel zuordbar ist, erfolgt der Aufbau eines Bypasses zu einem in diesem geographischen Bereich angeordneten Switch. Sofern die Header-Information einem bestimmten geographischen Ziel nicht zuordbar ist, wird, wie oben bechrieben, ein Bypass zu einem Zwischenknoten aufgebaut, der von den Datenpaketen im Normalfall durchlaufen wird. Gegebenenfalls weist der Switch zahlreiche Bypässe zu verschiedenen Switches auf, wobei jeweils nur Datenpakete mit gleichem oder ähnlichen topologischen Zielmerkmalen zu den einzelnen Switches im Rahmen des Bypasses übertragen werden.

Die Erfindung beschränkt sich in ihrer Ausführung nicht auf die vorstehend angegebenen Ausführungsbeispiele. Vielmehr sind eine Anzahl von Varianten denkbar, welche von der Erfindung auch bei grundsätzlich anders gearteten Ausführungen Gebrauch machen.

## Patentansprüche

1. Verfahren zur Übertragung von Daten von einem ersten Switch zu einem zweiten Switch, die Teil eines leitungsvermittelten Netzes sind oder Zugang zu einem leitungsvermittelten Netz haben, wahlweise per Leitungsvermittlung oder per Paketvermittlung, bestehend aus folgenden Schritten:
a) Aufbau einer Verbindung über das leitungsvermittelte Netz vom ersten Switch zu einem Zugangspunkt eines paketvermittelten Netzes,
b) leitungsvermitteltes Übertragen der Daten vom ersten Switch zum Zugangspunkt des paketvermittelten Netzes,
c) Paketierung der Daten, sofern diese noch nicht als Datenpakete vorliegen, und paketvermitteltes Übertragen der Datenpakete über das paketvermittelte Netz vom Zugangspunkt zum zweiten Switch,
d) wiederholtes Prüfen, ob ein durch den Nutzer eines Endgerätes oder ein Netzwerkmanagement ausgelöstes Steuersignal zum Übergang auf eine leitungsvermittelte Verbindung zum zweiten Switch vorliegt,
e)Aufbau einer leitungsvermittelten Verbindung vom ersten Switch zum zweiten Switch über das leitungsvermittelte Netz bei Vorliegen eines entsprechenden Steuersignals, sofern diese noch nicht vorhanden ist,
f) Wechseln auf eine leitungsvermittelte Datenübertragung während der bestehenden Verbindung und Übertragen der Daten zum zweiten Switch.

2. Verfahren zur Übertragung von Daten von einem ersten Switch zu einem zweiten Switch, die sowohl Teil eines leitungsvermittelten Netzes als auch eines paketvermittelten Netzes sind bzw. Zugang zu solchen Netzen haben, wahlweise per Leitungsvermittlung oder per Paketvermittlung, bestehend aus folgenden Schritten:
a) Paketierung der Daten im ersten Switch, sofern die Daten noch nicht als Datenpakete vorliegen,
b) paketvermitteltes Übertragen der Datenpakete über das paketvermittelte Netz zum zweiten Switch,
c) wiederholtes Prüfen, ob ein durch den Nutzer eines Endgerätes oder ein Netzwerkmanagement ausgelöstes Steuersignal zum Übergang auf eine leitungsvermittelte Verbindung zum zweiten Switch vorliegt,
d)Aufbau einer leitungsvermittelten Verbindung über das leitungsvermittelte Netz zum zweiten Switch bei Vorliegen eines entsprechenden Steuersignals, sofern diese noch nicht vorhanden ist,
e) Wechseln auf eine leitungsvermittelte Datenübertragung während der bestehenden Verbindung und Übertragen der Daten zum zweiten Switch.

3. Verfahren nach Anspruch 1 oder 2, bei dem die Datenpakete nach dem Wechsel auf eine leitungsvermittelte Datenübertragung als Datenpakete bestehen bleiben und als solche leitungsvermittelt übertragen werden.

4. Verfahren nach Anspruch 1 oder 2, bei dem die Datenpakete nach dem Wechsel auf eine leitungsvermittelte Datenübertragung depaketiert, insbesondere die Header der Datenpakete entfernt werden.

5. Verfahren nach mindestens einem der Ansprüche 1, 3 oder 4, bei dem zur Versendung der Datenpakete zum Zugangspunkt zum paketvermittelten Netz und zum Übertragen der Daten über das leitungsvermittelte Netz zum zweiten Switch derselbe Datenkanal verwendet wird.

6. Verfahren nach nach mindestens einem der Ansprüche 1, 3 oder 4, bei dem über einen ersten Datenkanal die Datenpakete zum Zugangspunkt zum paketvermittelten Netzes und über einen zweiten Datenkanal die Daten leitungsvermittelt zum zweiten Switch übertragen werden.

7. Verfahren nach mindestens einem der vorangehenden Ansprüche, bei dem das leitungsvermittelte Netz ein ISDN-Netz mit ISDN Switches darstellt, die Datenpakete das Format TCP/IP aufweisen und die zur leitungsvermittelten Datenübertragung verwendeten Datenkanäle ISDN B-Kanäle darstellen.

8. Verfahren nach mindestens einem der vorangehenden Ansprüche, bei dem das Steuersignal, das einen Wechsel zwischen leitungsvermittelter und paketvermittelter Übertragung auslöst, bei Unter- bzw. Überschreiten bestimmter Anforderungen an die Qualität der Datenübertragung, wie Zeitverzögerung oder Rauschanteil, automatisch oder aufgrund eines Befehls eines Netzwerkmanagements oder eines Endgerätes erzeugt wird.

9. Verfahren nach mindestens einem der vorangehenden Ansprüche, bei dem bei einer leitungsvermittelten Datenübertragung zwischen dem ersten Switch und dem zweiten Switch bzw. zwischen dem ersten Switch und dem Zugangspunkt zum paketvermittelten Netz die Daten mehrerer Nutzer unter Bildung von Subkanälen fester Bandbreite auf einem Datenkanal gemultiplext werden.

10. Verfahren nach Anspruch 9, bei dem die Daten eines Nutzers nach dessen Wahl mit einer Übertragungsrate leitungsvermittelt übertragen werden, die einem Bruchteil der Übertragungsrate der dem Nutzer standardgemäß zur Verfügung stehenden Bandbreite entspricht.

11. Verfahren nach Anspruch 9 oder 10, bei dem das leitungsvermittelte Netz ein ISDN-Netz ist und die zu übertragenden Daten eines Nutzers zwischen den Switches bzw. einem Switch und dem Zugangspunkt zum paketvermittelten Netz auf einem Datenkanal mit einer Bandbreite übertragen werden, die einem Bruchteil der standardgemäß zur Verfügung stehenden Bandbreite von 64 kbit/s entspricht, insbesondere 32, 16, 8, 4, 2 oder 1 kbit/s.

12. Verfahren nach Anspruch 11, bei dem im Switch nur jedes n-te Byte oder jedes n-te bit eines ISDN-Rahmens sogleich umkopiert und auf dem durchgeschalteten Datenkanal zum nächsten Switch oder zu einem Zugangspunkt zum paketvermittelten Netz weitergeleitet wird, wobei die Bandbreite der Übertragung 64 kbit/s/ n beträgt.

13. Verfahren nach mindestens einem der vorangehenden Ansprüche, bei dem bei einem Wechsel von einer paketvermittelten zu einer leitungsvermittelten Übertragung
a) die Adreßinformationen der Datenpakete ausgewertet und nach netztopologischen Gesichtspunkten geordnet,
b) zu Datenpaketen, deren Zieladressen den gleichen topologischen Teilbereich des Netzes betreffen, ein in diesem Teilbereich befindlicher Switch ausgewählt,
c) eine leitungsvermittelte Verbindung (Bypass) zu dem ausgewählten Switch aufgebaut und
d) die entsprechenden Daten bzw. Datenpakete leitungsvermittelt zu dem Switch übertragen werden.

14. Verfahren nach Anspruch 13, **dadurch gekennzeichnet**, daß zur Ordnung der Datenpakete nach netztopologischen Gesichtspunkten die Zieladressen der Datenpakete nach geographischen Gesichtspunkten geordnet werden, wobei zu Datenpaketen, deren Zieladressen den gleichen geographischen Raum betreffen, ein in diesem geographischen Raum befindlicher Switch ausgewählt und eine leitungsvermittelte Verbindung zu diesem Switch aufgebaut wird.

15. Verfahren nach Anspruch 14, **dadurch gekennzeichnet**, daß zu einer Ordnung der Datenpakete nach geographischen Gesichtspunkten die Zieladressen mit in einer Datenbank gespeicherten Zieladressen verglichen werden, wobei die Datenbank eine Zuordnung zwischen Zieladressen und der zugehörigen geographischen Lage enthält.

16. Verfahren nach mindestens einem der vorangehenden Ansprüche, bei dem in entsprechender Weise während einer bestehenden Verbindung ein Wechsel zwischen einer leitungsvermittelten und einer paketvermittelten Übertragung erfolgt.

17. Switch zur Verwendung in einem Verfahrens nach Anspruch 1 oder 2 mit mindestens einer Paketier-Einrichtung (713, 714) zum Paketieren bzw. Depaketieren von Daten, einer Packet-Switching-Einrichtung (72) zum Routen von Datenpaketen und einer Line-Switching-Einrichtung (73) zum Verbindungsaufbau vcn Datenkanälen,
**gekennzeichnet durch**
eine Steuereinrichtung (71), die während einer bestehenden Verbimdung in Abhängigkeit von Steuersignalen eines Nutzers eines Endgerätes oder eines Netzwerkmanagements ankommende Daten der Verbindung entweder an die Pakket-Switching-Einrichtung (72) oder an die Line-Switching-Einrichtung (73) leitet.

18. Switch nach Anspruch 17, **dadurch gekennzeichnet**, daß des weiteren eine Topologie-Datenbank (75) vorgesehen ist, die eine Zuordnung zwischen Zieladressen von Datenpaketen und zugehöriger geographischer Herkunft enthält.

19. Switch nach Anspruch 17 oder 18, **dadurch gekennzeichnet**, daß des weiteren ein Multiplexer (732) vorgesehen ist, der bei Vorliegen eines entsprechenden Steuerbefehls mehrere Datenströme derart multiplext, daß jeweils nur jedes n-te bit und/oder jedes n-te Byte im abgehenden Datenkanal verwendet wird.

20. Switch nach Anspruch 19, **dadurch gekennzeichnet**, daß verschiedene Eingangs-Datenströme verschieden große Anteile im abgehenden Datenkanal belegen.

21. Switch nach einem der Ansprüche 17 bis 20, **dadurch gekennzeichnet**, daß zusätzlich eine Einrichtung (721) zur Komprimierung und Dekomprimierung von Daten vorgesehen ist.

## Claims

1. A method for transmitting data from a first switch to a second switch, which are components of a line-switching network or have access to a line-switching network, either by line-switching or by packet-switching, consisting of the following steps:
a) formation of a connection over the line-switching network from the first switch to an access point of a packet-switching network,
b) line-switching transmission of the data from the first switch to the access point of the packet-switching network,
c) packeting the data if it is not already in data packets, and packet-switching transmission of the data packets over the packet-switching network from the access point to the second switch,
d) repeated checking whether there is a control signal for transfer to a line-switching connection to the second switch, whereby this signal is emitted by the user of an end device or a network management,
e) formation of a line-switching connection from the first switch to the second switch over the line-switching network when there is a corresponding control signal if such a line-switching connection does not already exist,
f) changing to line-switching data transmission during the existing connection and transmission of the data to the second switch.

2. A method for transmitting data from a first switch to a second switch, which are components of both a line-switching network and a packet-switching network / which have access to such networks, either by line-switching or by packet-switching, consisting of the following steps:
a) packeting the data in the first switch if the data is not already in packets,
b) packet-switching transmission of the data packets over the packet-switching network to the second switch,
c) repeated checking whether there is a control signal for transfer to a line-switching connection to the second switch, whereby this signal is emitted by the user of an end device or a network management,
d) formation of a line-switching connection over the line-switching network to the second switch when there is a corresponding control signal if such a line-switching connection does not already exist,
e) changing to line-switching data transmission during the existing connection and transmission of the data to the second switch.

3. A method according to Claim 1 or Claim 2, whereby after the change to line-switching data transmission the data packets remain as data packets and are transmitted as such by line-switching.

4. A method according to Claim 1 or Claim 2, whereby after the change to line-switching data transmission the data packets are de-packeted, in particular the headers of the data packets are removed.

5. A method according to at least one of the Claims 1, 3 or 4, whereby the same data channel is used for the purpose of sending the data packets to the access point to the packet-switching network and for the purpose of transmitting the data over the line-switching network to the second switch.

6. A method according to at least one of the Claims 1, 3 or 4, whereby by means of a first data channel the data packets are transmitted to the access point to the packet-switching network, and by means of a second data channel the data is transmitted by line-switching to the second switch.

7. A method according to at least one of the preceding claims, whereby the line-switching network constitutes an ISDN network with ISDN switches, the data packets have the TCP/IP format, and the data channels used for line-switching data transmission constitute ISDN B-channels.

8. A method according to at least one of the preceding claims, whereby the control signal which initiates a change between line-switching transmission and packet-switching transmission is produced automatically or on the basis of a command of a network management or an end device, when certain quality requirements of the data transmission are fallen short of or exceeded, such as time lag or murmuring.

9. A method according to at least one of the preceding claims, whereby during line-switching data transmission between the first switch and the second switch / between the first switch and the access point to the packet-switching network, the data of several users is multiplexed in one data channel whereby sub-channels of a fixed band width are formed.

10. A method according to Claim 9, whereby the data of a user according to his choice is transmitted by line-switching at a transmission rate which corresponds to a fraction of the transmission rate of the band width which is available to the user as standard.

11. A method according to Claim 9 or Claim 10, whereby the line-switching network is an ISDN network and the data of a user which is to be transmitted is transmitted between the switches / a switch and the access point to the packet-switching network in a data channel with a band width which corresponds to a fraction of the band width of 64 kbit/s available as standard, in particular 32, 16, 8, 4, 2 or 1 kbit/s.

12. A method according to Claim 11, whereby in the switch only each X^{th} byte or each X^{th} bit of an ISDN frame is directly copied and transmitted to the next switch or to an access point to the packet-switching network in the data channel which is connected through, whereby the band width of the transmission is 64 kbit/s / X.

13. A method according to at least one of the preceding claims, whereby upon a change from a packet-switching transmission to a line-switching transmission,
a) the address information of the data packets is analysed and arranged according to network topological factors,
b) for data packets whose target addresses relate to the same topological sub-area of the network, a switch positioned in this sub-area is selected,
c) a line-switching connection (bypass) to the selected switch is formed, and
d) the corresponding data / data packets are transmitted by line-switching to the switch.

14. A method according to Claim 13 **characterised in that** for the purpose of arranging the data packets according to network topological factors, the target addresses of the data packets are arranged according to geographical factors, whereby for data packets whose target addresses relate to the same geographical area a switch positioned in this geographical area is selected and a line-switching connection is formed to this switch.

15. A method according to Claim 14 **characterised in that** for the purpose of arranging the data packets according to geographical factors, the target addresses are compared with target addresses stored in a data bank, whereby the data bank contains a classification between target addresses and the corresponding geographical location.

16. A method according to at least one of the preceding claims, whereby in an appropriate way during an existing connection, a change takes place between a line-switching transmission and a packet-switching transmission.

17. A switch for use in a method according to Claim 1 or Claim 2 with at least a packeting device (713, 714) for packeting / de-packeting data, a packet-switching device (72) for routing data packets and a line-switching device (73) for connection formation of data channels,
**characterised by**
a control device (71), which during an existing connection transmits incoming data of the connection either to the packet-switching device (72) or to the line-switching device (73), dependent upon control signals of a user of an end device or a network management.

18. A switch according to Claim 17 **characterised in that** a topology data bank (75) is also provided, which contains a classification between target addresses of data packets and corresponding geographical origin.

19. A switch according to Claim 17 or Claim 18 **characterised in that** a multiplexer (732) is also provided, whereby when there is a corresponding control command this multiplexer (732) multiplexes several data streams in such a way that only each respective X ^{th} bit and / or each respective X^{th} byte is used in the outgoing data channel.

20. A switch according to Claim 19 **characterised in that** different input data streams cover differing size portions in the outgoing data channel.

21. A switch according to one of the Claims 17 to 20 **characterised in that** a device (721) for condensing and decondensing data is also provided.

## Revendications

1. Procédé pour transmettre des données d'un premier commutateur à un deuxième commutateur, qui font partie d'un réseau à commutation de lignes ou qui ont accès à un réseau à commutation de lignes, au choix par commutation de lignes ou par commutation de paquets, constitué par les étapes suivantes :
a) établissement d'une liaison par l'intermédiaire du réseau à commutation de lignes depuis un premier commutateur jusqu'à un point d'accès d'un réseau à commutation de paquets ;
b) transmission, selon une communication de lignes, des données depuis le premier commutateur jusqu'au point d'accès du réseau de commutation de paquets ;
c) mise en paquets des données dans la mesure où ces dernières ne sont pas encore présentes sous la forme de paquets de données, et transmission, selon une commutation de paquets, des paquets de données par l'intermédiaire du réseau de commutation de paquets depuis le point d'accès jusqu'au second commutateur,
d) contrôle réitéré pour déterminer si un signal de commande déclenché par l'utilisateur d'un terminal ou par une unité de gestion du réseau et destiné à réaliser le passage à une liaison, par commutation de lignes, en direction du second commutateur est présent ou non,
e) établissement d'une liaison, par commutation de lignes, depuis le premier commutateur au second commutateur par l'intermédiaire du réseau à commutation de lignes, dans le cas de la présence d'un signal de commande correspondant, dans la mesure où ce dernier n'est pas encore présent,
f) passage à une transmission de données avec commutation de lignes pendant la liaison existante et transmission des données au second commutateur.

2. Procédé pour la transmission de données d'un premier commutateur à un deuxième commutateur, qui font partie d'un réseau à commutation de lignes ou qui ont accès à un réseau à commutation de lignes, au choix par commutation de lignes ou par commutation de paquets, constitué par les étapes suivantes :
a) mise en paquets des données dans le premier commutateur dans la mesure où les données ne sont pas encore présentes sous la forme de paquets de données ;
b) transmission, par commutation de paquets, des paquets de données par l'intermédiaire du réseau à commutation de paquets, au second commutateur,
c) contrôle réitéré pour déterminer si un signal de commande déclenché par l'utilisateur d'un terminal ou par une unité de gestion du réseau destiné à être transféré par l'intermédiaire d'une liaison à commutation de lignes, au second commutateur est présent ou non,
d) établissement d'une liaison à commutation de lignes depuis le premier commutateur au second commutateur par l'intermédiaire du réseau à commutation de lignes, dans le cas de la présence d'un signal de commande correspondant, dans la mesure où ce dernier n'est pas encore présent,
e) passage à une transmission de données avec commutation de lignes pendant la liaison existante et transmission des données au second commutateur.

3. Procédé selon la revendication 1 ou 2, selon lequel après le passage à une transmission de données avec commutation de lignes, les paquets de données restent sous la forme de paquets de données et sont transmis en tant que tels dans une ligne.

4. Procédé selon la revendication 1 ou 2, selon lequel après le passage à une transmission de données avec commutation de lignes, les paquets de données sont dépaquetés, et notamment les en-têtes des paquets de données sont retirés.

5. Procédé selon au moins l'une des revendications 1, 3 ou 4, selon lequel pour l'émission des paquets de données en direction du point d'accès du réseau à commutation de paquets et pour une transmission des données par l'intermédiaire du réseau à commutation de lignes au second commutateur, on utilise le même canal de transmission de données.

6. Procédé selon au moins l'une des revendications 1, 3 ou 4, selon lequel les paquets de données sont transmis par l'intermédiaire d'un canal de transmission de données au point d'accès du réseau à commutation de paquets, et les données sont transmises par l'intermédiaire d'un second canal de transmission de données, au moyen d'une commutation de lignes, au second commutateur.

7. Procédé selon au moins l'une des revendications précédentes, selon lequel le réseau à commutation de lignes est un réseau ISDN comportant des commutateurs ISDN, que les paquets de données possèdent le format CP/IP et que les canaux de transmission de données utilisés pour la transmission de données avec commutation de lignes représentent des canaux B ISDN.

8. Procédé selon au moins l'une des revendications précédentes, selon lequel le signal de commande, qui déclenche une commutation entre la transmission à commutation de lignes et la transmission à commutation de paquets, est produit lorsque la transmission de données dépasse par le bas et par le haut des exigences de qualité déterminées, comme par exemple un retard ou une composante de bruit, automatiquement ou sur la base d'une instruction d'une unité de gestion du réseau ou d'un terminal.

9. Procédé selon au moins l'une des revendications précédentes, selon lequel dans le cas d'une transmission de données au moyen d'une ligne entre le premier commutateur et le second commutateur et entre le premier commutateur et l'accès au réseau à commutation de paquets, les données de plusieurs utilisateurs sont multiplexés moyennant la formation de sous-canaux ayant une largeur de bande fixe, dans un canal de transmission de données.

10. Procédé selon la revendication 9, selon lequel les données d'un utilisateur sont transmises avec commutation de lignes, en fonction du choix de cet utilisateur, avec une cadence de transmission qui correspond à une fraction de la cadence de transmission de la largeur de bande, dont dispose de façon standard l'utilisateur.

11. Procédé selon la revendication 9 ou 10, selon lequel le réseau à commutation de lignes est un réseau ISDN et les données à transmettre d'un utilisateur sont transmises entre le commutateur ou un commutateur et le point d'accès au réseau à commutation de paquets, dans un canal de transmission de données avec une largeur de bande qui correspond à une fraction de la largeur de bande standard disponible de 64 k.bits/s, notamment 32, 16, 8, 4, 2 ou 1 k.bit/s.

12. Procédé selon la revendication 11, selon lequel dans le commutateur seul chaque n-ème octet ou chaque n-ème bit d'une trame ISDN est pour ainsi dire recopié et est transmis au canal de transmission de données interconnecté jusqu'au commutateur suivant ou jusqu'à un point d'accès au réseau à commutation de paquets, la largeur de bande de la transmission étant égale à 64 k.bits/s/n.

13. Procédé selon a moins l'une des revendications précédentes, selon lequel dans le cas d'une transmission à commutation de paquets à une transmission à commutation de lignes,
a) les informations d'adresses des paquets de données sont exploitées et rangées selon des points de vue de la topologie des réseaux,
b) pour des paquets de données, dont les adresses de destination concernent la même zone partielle topologique du réseau, un commutateur situé dans cette zone partielle est sélectionné,
c) une liaison à commutation de lignes (by-pass) en direction du commutateur sélectionné est établie, et
d) les données correspondantes ou les paquets de données correspondants sont transmis par commutation de lignes au commutateur.

14. Procédé selon la revendication 13, caractérisé en ce que pour le rangement des paquets de données selon des points de vue de la topologie des réseaux, les adresses de destination des paquets de données sont rangées selon des points de vue géographiques, et pour des paquets de données, dont les adresses de destination concernent le même espace géographique, un commutateur situé dans cet espace géographique est sélectionné et une liaison, avec commutation de lignes est établie avec ce commutateur.

15. Procédé selon la revendication 14, caractérisé en ce que pour un rangement des paquets de données selon des points de vue géographiques, les adresses de destination sont comparées à des adresses de destination mémorisées dans un bloc de données, le bloc de données contenant une association entre des adresses de destination et la position géographique associée.

16. Procédé selon au moins l'une des revendications précédentes, selon lequel de façon correspondante une commutation entre une transmission à commutation de lignes et une transmission à commutation de paquets est exécutée pendant une liaison existante.

17. Commutateur destiné à être utilisé dans un procédé selon la revendication 1 ou 2, comportant au moins un dispositif de mise en paquets (713, 714) pour mettre en paquets et dépaqueter des données, un dispositif de commutation de paquets (72) pour acheminer des paquets de données à un dispositif de commutation de lignes (73) pour l'établissement de la liaison de canaux de transmission de données,
caractérisé par
un dispositif de commande (71) qui, pendant une liaison existante, envoie en fonction de signaux de commande de l'utilisateur d'un terminal ou d'une unité de gestion du réseau, des données arrivantes de la liaison soit au dispositif de commutation de paquets (72) , soit au dispositif de commutation de lignes (73).

18. Commutateur selon la revendication 17, caractérisé en ce qu'il est prévu d'autre part un bloc de données de topologie (75) qui contient une association entre des adresses de destination de paquets de données et la provenance géographique associée.

19. Commutateur selon la revendication 17 ou 18, caractérisé en ce que d'autre part il est prévu un multiplexeur (732) qui, lors de la présence d'une instruction de commande correspondante, multiplexe plusieurs flux de données de telle sore que respectivement seul chaque n-ème bit ou chaque n-octet dans le canal de données de départ sont utilisés.

20. Commutateur selon la revendication 19, caractérisé en ce que différents flux de données d'entrée occupent des parties de tailles différentes dans le canal de données de départ.

21. Commutateur selon l'une des revendications 17 à 20, caractérisé en ce qu'il est prévu en supplément un dispositif (721) pour comprimer et décomprimer des données.
